# EUROPEAN PATENT SPECIFICATION

(11) **EP 3 275 717 B1**
(45) Date of publication and mention of the grant of the patent: **22.03.2023**
(21) Application number: 17163907.3
(22) Date of filing: 30.03.2017
(51) Int. Cl.: B60L 3/12, B62K 23/08, B62K 11/00

(54) **METHOD AND APPARATUS FOR CONTROLLING SELF-BALANCED VEHICLE**
VERFAHREN UND VORRICHTUNG ZUR STEUERUNG EINES SELBST BALANCIERTEN FAHRZEUGS
PROCÉDÉ ET APPAREIL DE COMMANDE DE VÉHICULE AUTO-ÉQUILIBRÉ

(30) Priority: 29.07.2016 CN 201610619170
(43) Date of publication of application: 31.01.2018
(73) Proprietor: Beijing Xiaomi Mobile Software Co., Ltd., Beijing 100085 (CN)
(72) Inventor: HA, Xiaolin, Beijing, Beijing 100085 (CN); YONG, Xing, Beijing, Beijing 100085 (CN); ZHANG, Xiaotong, Beijing, Beijing 100085 (CN); LIN, Shangquan, Beijing, Beijing 100085 (CN)
(74) Representative: dompatent von Kreisler Selting Werner - Partnerschaft von Patent- und Rechtsanwälten mbB

(56) References cited:
- CN-A- 105 270 527
- CN-A- 105 539 657
- GB-A- 2 525 677
- JP-A- 2004 140 949

## Description

### TECHNICAL FIELD

The present invention generally relates to the field of mobile communication technology, and more particularly, to a method and an apparatus for controlling a self-balanced vehicle.

### BACKGROUND

A self-balanced vehicle, also known as an electric self-balanced vehicle, is a new emerging transportation tool for a short distance.

An acceleration sensor and a gyroscope are provided inside the self-balanced vehicle, which may control the self-balanced vehicle according to a posture of a user's body. When it is monitored that the body center of gravity of the user standing on a pedal of the self-balanced vehicle moves forward, the self-balanced vehicle is controlled to speed up. When it is monitored that the body center of gravity of the user moves backward, the self-balanced vehicle is controlled to slow down. However, during the process of controlling the self-balanced vehicle to slow down by leaning back the body, the user may lose his/her balance and fall down due to a large backward tilting. Especially, when the speed of the self-balanced vehicle is fast, the user is more likely to lose his/her balance when leaning backward. A self-balanced vehicle and a method for controlling said vehicle based on changes of acquired parameter values is for example known from JP2004140949A.

### SUMMARY

Embodiments of the present invention provide a method and an apparatus for controlling a self-balanced vehicle, in accordance with claims which follow.

According to a first aspect, the invention relates to a method for controlling a self-balanced vehicle, including: acquiring a first state of a parameter input from a user through a pedal of the self-balanced vehicle; and when the first state indicates that a change has occurred in the parameter, controlling operation of the self-balanced vehicle according to the change.

According to the method described above, the parameter includes at least one of: a pressure parameter, and a contact area parameter between a foot of the user and the pedal of the self-balanced vehicle.

According to the method described above, the parameter includes the contact area parameter;
the method further includes:
acquiring a second state of the pressure parameter;
the acquiring a first state of a parameter input from a user through a pedal of the self-balanced vehicle includes:
when the second state indicates that the pressure parameter is changed, acquiring a first state of the contact area parameter.

According to an exemplary variation of the method useful for understanding the invention, the parameter includes the pressure parameter;
the method further includes:
acquiring a third state of the contact area parameter;
the acquiring a first state of a parameter input from a user through a pedal of the self-balanced vehicle includes:
when the third state indicates that the contact area parameter is changed, acquiring a first state of the pressure parameter.

According to an exemplary variation of the method useful for understanding the invention, the when the first state indicates that a change has occurred in the parameter, controlling operation of the self-balanced vehicle according to the change, includes:
when the first state indicates that the parameter is changed and a change value of the parameter is larger than a threshold value, controlling the operation of the self-balanced vehicle according to the change.

According to the method described above, when the first state indicates that the parameter is changed and a change value of the parameter is larger than a threshold value, controlling the operation of the self-balanced vehicle according to the change, includes at least one of:
when a decreasing value of the parameter is larger than a first threshold value, controlling the self-balanced vehicle to slow down according to the decreasing value; and
when an increasing value of the parameter is larger than a second threshold value, controlling the self-balanced vehicle to speed up according to the increasing value.

According to the method described above, the parameter includes the contact area parameter,
the when the first state indicates that the parameter is changed and a change value of the parameter is larger than a threshold value, controlling the operation of the self-balanced vehicle according to the change, includes at least one of:
when the first state indicates that a forefoot of the user is uplifted, controlling the self-balanced vehicle to slow down according to a decreasing value of the parameter; and
when the first state indicates that a heel of the user is uplifted, controlling the self-balanced vehicle to speed up according to a decreasing value of the parameter.

According to the method described above, after the operation of the self-balanced vehicle is controlled according to the change, the method further includes:
when the first state indicates that the parameter is the same as that before the change occurs, controlling the self-balanced vehicle to keep a current speed.

According to a second aspect, the invention relates to an apparatus for controlling a self-balanced vehicle, including: a first acquiring module, configured to acquire a first state of a parameter input from a user through a pedal of the self-balanced vehicle; and a first control module, configured to, when the first state indicates that a changed has occurred in the parameter, control operation of the self-balanced vehicle according to the change.

According to the apparatus described above, the parameter includes at least one of: a pressure parameter, and a contact area parameter between a foot of the user and the pedal of the self-balanced vehicle.

According to the apparatus described above, the parameter includes the contact area parameter;
the apparatus further includes:
a second acquiring module, configured to acquire a second state of the pressure parameter;
the first acquiring module includes:
a first acquiring unit, configured to, when the second state indicates that the pressure parameter is changed, acquire a first state of the contact area parameter.

According to an exemplary variation of the method useful for understanding the invention, the parameter includes the pressure parameter;
the apparatus further includes:
a third acquiring module, configured to acquire a third state of the contact area parameter;
the first acquiring module includes:
a second acquiring unit, configured to, when the third state indicates that the contact area parameter is changed, acquire a first state of the pressure parameter.

According to the apparatus described above, the first control module includes:
a control unit, configured to, when the first state indicates that the parameter is changed and a change value of the parameter is larger than a threshold value, control the operation of the self-balanced vehicle according to the change.

According to the apparatus described above, the control unit includes:
a first control sub-unit, configured to, when a decreasing value of the parameter is larger than a first threshold value, control the self-balanced vehicle to slow down according to the decreasing value; and
a second control sub-unit, configured to, when an increasing value of the parameter is larger than a second threshold value, control the self-balanced vehicle to speed up according to the increasing value.

According to the apparatus described above, the parameter includes the contact area parameter;
the control unit includes:
a third control sub-unit, configured to, when the first state indicates that a forefoot of the user is uplifted, control the self-balanced vehicle to slow down according to a decreasing value of the parameter; and
a fourth control sub-unit, configured to, when the first state indicates that a heel of the user is uplifted, control the self-balanced vehicle to speed up according to a decreasing value of the parameter.

According to the apparatus described above, the apparatus further includes:
a second control module, configured to, when the first state indicates that the parameter is the same as that before the change occurs, control the self-balanced vehicle to keep a current speed.

According to a third aspect, the invention relates to an apparatus for controlling a self-balanced vehicle, including: a processor; and a memory for storing instructions executable by the processor, wherein the processor is configured to perform:
acquiring a first state of a parameter input from a user through a pedal of the self-balanced vehicle; and
when the first state indicates that a change has occurred in the parameter, controlling operation of the self-balanced vehicle according to the change.

In one particular embodiment, the steps of the method for controlling a self-balanced vehicle are determined by computer program instructions.

Consequently, according to a fourth aspect, the present invention is also directed to a computer program for executing the steps of a method for controlling a self-balanced vehicle as described above when this program is executed by a computer.

This program can use any programming language and take the form of source code, object code or a code intermediate between source code and object code, such as a partially compiled form, or any other desirable form.

The present invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present invention may have the following beneficial effects.

When the user uses the self-balanced vehicle, a first state of a parameter input from a user through a pedal of the self-balanced vehicle is acquired; and when the first state indicates that a change has occurred in the parameter, operation of the self-balanced vehicle is controlled according to the change. Therefore, the self-balanced vehicle is controlled according to the parameter change of the pedal of the self-balanced vehicle. The user may conveniently control the speed of the self-balanced vehicle by his/her feet, which increases the driving safety.

It is to be understood that both the foregoing general description and the following detailed description are exemplary and explanatory only and are not restrictive of the present invention.

In the present application, the expressions "first state", "second state" and "third state" merely serve for expressing that different sets of parameters are acquired so that it is possible to differentiate between the different parameter states. However, the expression "first", "second" and "third" shall not define the sequence in which the different states are acquired. Therefore, for example it is possible that the second state can be acquired before the first state. The expressions "first", "second" and "third" only serve for showing that different states of parameters are acquired.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart showing a method for controlling a self-balanced vehicle according to an exemplary embodiment.
Fig. 2 is a flow chart showing a method for controlling a self-balanced vehicle according to an example useful for understanding of the invention.
Fig. 3 is a flow chart showing a method for controlling a self-balanced vehicle according to another exemplary embodiment.
Fig. 4 is a block diagram showing an apparatus for controlling a self-balanced vehicle according to an exemplary embodiment.
Fig. 5 is a block diagram showing an apparatus for controlling a self-balanced vehicle according to an example useful for understanding of the invention.
Fig. 6 is a block diagram showing an apparatus for controlling a self-balanced vehicle according to another exemplary embodiment.
Fig. 7 is a block diagram showing an apparatus for controlling a self-balanced vehicle according to another exemplary embodiment.
Fig. 8 is a block diagram showing an apparatus for controlling a self-balanced vehicle according to another exemplary embodiment.
Fig. 9 is a block diagram showing an apparatus for controlling a self-balanced vehicle according to another exemplary embodiment.
Fig. 10 is a block diagram showing an apparatus for controlling a self-balanced vehicle according to another exemplary embodiment.
Fig. 11 is a block diagram showing an apparatus for controlling a self-balanced vehicle according to an exemplary embodiment.

Through the above accompanying drawings, specific embodiments of the present invention have been shown, for which a more detailed description will be given as below. These drawings and textual description are not intended to limit the scope of the concept of the present invention in any manner, but to explain the concept of the present invention to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

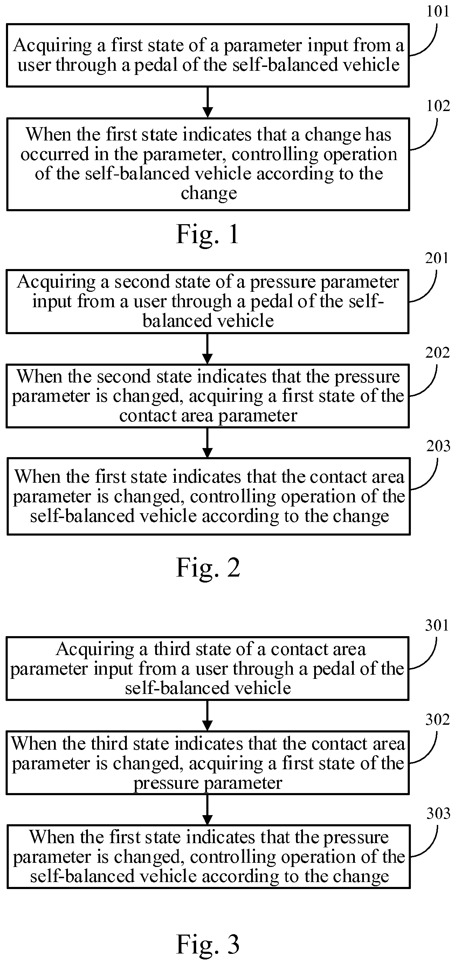

The embodiments of the present invention provide a method for controlling a self-balanced vehicle. In the present embodiment, for example, the method for controlling the self-balanced vehicle is applicable in a self-balanced vehicle, and the self-balanced vehicle has a pedal. Referring to Fig. 1, Fig. 1 is a flow chart showing a method for controlling a self-balanced vehicle according to an exemplary embodiment. As shown in Fig. 1, the method for controlling a self-balanced vehicle may include following steps.

In step 101, a first state of a parameter input from a user through a pedal of the self-balanced vehicle is acquired.

In the present embodiment, the parameter includes at least one of: a pressure parameter, and a contact area parameter between a foot of the user and the pedal of the self-balanced vehicle.

That is, when the user uses the self-balanced vehicle, he/she may control the operation of the self-balanced vehicle through his/her feet.

In step 102, when the first state indicates that a change has occurred in the parameter, operation of the self-balanced vehicle is controlled according to the change.

When the user uses the self-balanced vehicle, in order to accurately control the operation of the self-balanced vehicle, when the first state indicates that the parameter is changed, it may be further judged whether a change value of the parameter is larger than a threshold value. If the change value of the parameter is larger than the threshold value, the operation of the self-balanced vehicle is controlled according to the change.

In the present embodiment, the threshold value is a threshold value of a change value of a preset parameter of the self-balanced vehicle.

In the present embodiment, it should be understood that, the parameter changing may be an increasing of the parameter value of the parameter, or a decreasing of the parameter value of the parameter. Usually, different changes correspond to different manners for controlling the self-balanced vehicle.

As an exemplary implementation, when it is monitored that the parameter value of the parameter is decreasing, it may be further judged whether the decreasing value of the parameter is larger than a first threshold value. If the decreasing value of the parameter is larger than the first threshold value, the self-balanced vehicle is controlled to slow down according to the decreasing value.

In the present embodiment, it should be noted that, the self-balanced vehicle may be controlled to slow down according to the magnitude of the decreasing value. The larger the decreasing value is, the larger the speed value of the self-balanced vehicle decreases.

For example, when the user uses the self-balanced vehicle having two pedals, a contact area between the feet and the self-balanced vehicle may be acquired. When it is monitored that the user uplifts his/her forefoot, it may be monitored that the contact area between the feet and the self-balanced vehicle decreases. At this time, it may be further judged whether the decreasing value of the decreased contact area is larger than a first threshold value. If the decreasing value is larger than the first threshold value, the self-balanced vehicle is controlled to slow down according to the decreasing value. Thereby, the user may slow down the self-balanced vehicle by changing the state of his/her feet on the pedals of the self-balanced vehicle, which may avoid that the user loses his/her balance due to the user's leaning backward and the backward moving of the body center of gravity. Thereby, the safety of the self-balanced vehicle is improved.

As another exemplary implementation, when it is monitored that the parameter value of the parameter is increasing, it may be further judged whether the increasing value of the parameter is larger than a second threshold value. If the increasing value of the parameter is larger than the second threshold value, the self-balanced vehicle is controlled to speed up according to the increasing value.

In the present embodiment, it should be understood that, the self-balanced vehicle may be controlled to speed up according to the magnitude of the increasing value. The larger the increasing value is, the larger the speed value of the self-balanced vehicle increases.

For example, when the user uses the self-balanced vehicle, the distribution of the pressure parameter on the pedal of the self-balanced vehicle may be analyzed. When it is monitored that the pressure value of the heel on the pedal is increasing, it may be further judged whether the increasing value is larger than a second threshold value. If the increasing value is larger than the second threshold value, the self-balanced vehicle is controlled to speed up according to the increasing value. Thereby, the user may conveniently control the self-balanced vehicle to speed up through his/her feet.

In the present embodiment, it should be understood that, both the first threshold value and the second threshold value are preset threshold values of the self-balanced vehicle. The first threshold value may be the same as or different from the second threshold value. The present embodiment is not limited thereto.

In conclusion, according to the method for controlling a self-balanced vehicle provided according to the present embodiment, during the process of controlling operation of the self-balanced vehicle, the user may control the self-balanced vehicle to speed up or slow down by changing the state of his/her feet on the self-balanced vehicle, which facilitates the user to control the self-balanced vehicle by his/her feet, avoids that the user loses his/her balance due to the user's leaning backward and the backward moving of the body center of gravity. Thereby, the safety of the self-balanced vehicle is improved.

In conclusion, through the method for controlling a self-balanced vehicle provided according to the present embodiment, when the user uses the self-balanced vehicle, a first state of a parameter input from a user through a pedal of the self-balanced vehicle is acquired; and when the first state indicates that a change has occurred in the parameter, operation of the self-balanced vehicle is controlled according to the change. Therefore, the self-balanced vehicle is controlled according to the parameter change of the pedal of the self-balanced vehicle. The user may conveniently control the speed of the self-balanced vehicle by his/her feet, which increases the driving safety.

On the basis of the above embodiment, after the operation of the self-balanced vehicle is controlled according to the change, the method may further include: when the first state indicates that the parameter is the same as that before the change occurs, controlling the self-balanced vehicle to keep a current speed.

For example, when the user uses the self-balanced vehicle, assuming that the user puts his/her entire foot on the pedal of the self-balanced vehicle at the beginning, at this time, the contact area between the foot and the pedal of the self-balanced vehicle acquired by the self-balanced vehicle is measured to be A. In order to slow down the self-balanced vehicle, the user uplifts his/her forefoot, it may be determined that the contact area between the foot and the pedal is decreasing by comparison. Assuming that the acquired contact area is B, during the process of slowing down the self-balanced vehicle according to the change, after the speed of the self-balanced vehicle reaches a desired speed, the user may put his/her forefoot on the self-balanced vehicle again. At this time, the contact area between the foot and the pedal of the self-balanced vehicle changes from B to A, it may be determined that the value of the contact area parameter is the same as that before the change occurs. At this time, the current speed of the self-balanced vehicle may be acquired and the self-balanced vehicle is controlled to be operated in the current speed.

An example useful for understanding of the invention provides a method for controlling a self-balanced vehicle. In the present embodiment, for example, the method for controlling the self-balanced vehicle is applicable in a self-balanced vehicle, and the self-balanced vehicle has a pedal. Referring to Fig. 2, Fig. 2 is a flow chart showing a method for controlling a self-balanced vehicle according to another exemplary embodiment. As shown in Fig. 2, the method for controlling a self-balanced vehicle may include following steps.

In step 201, a second state of a pressure parameter input from a user through a pedal of the self-balanced vehicle is acquired.

In order to allow the user to control operation of the self-balanced vehicle through his/her feet, a plurality of pressure sensors may be installed on the pedal of the self-balanced vehicle. When the user uses the self-balanced vehicle, the pressure data collected by the plurality of pressure sensors may be analyzed, and the state of the pressure parameter of the self-balanced vehicle may be determined according to the analysis result.

In step 202, when the second state indicates that the pressure parameter is changed, a first state of the contact area parameter is acquired.

When the user uses the self-balanced vehicles, the state of the pressure parameter in the pedal of the self-balanced vehicle may be monitored. When it is monitored that the state of the pressure parameter in the pedal of the self-balanced vehicle is changed, it may be determined that the pressure parameter has been changed. In order to control the operation of the self-balanced vehicle, a first state of the contact area parameter input from the user through the pedal of the self-balanced vehicle may be acquired.

In step 203, when the first state indicates that the contact area parameter is changed, operation of the self-balanced vehicle is controlled according to the change.

After the first state of the contact area parameter is acquired, it may be judged whether the first state indicates that the contact area parameter is changed. When it is determined that the first state indicates that the contact area parameter is changed, it may be further judged whether the change value of the contact area parameter is larger than a threshold value. If the change value of contact area parameter is larger than the threshold value, the operation of the self-balanced vehicle is controlled according to the change.

In the example useful for understanding of the invention, the threshold value is a threshold value of a change value of a preset contact area parameter of the self-balanced vehicle.

As an exemplary implementation, when the first state indicates that the forefoot of the user is uplifted, the self-balanced vehicle is controlled to slow down according to the decreasing value of the parameter. That is, when the first state indicates that the forefoot of the user is uplifted, the self-balanced vehicle is controlled to slow down according to the decreasing value of the contact area parameter.

In the example useful for understanding of the invention, it should be noted that, the self-balanced vehicle may be controlled to slow down according to the magnitude of the decreasing value. The larger the decreasing value is, the larger the speed value of the self-balanced vehicle decreases.

For example, when the user uses the self-balanced vehicle having two pedals, a contact area between the feet and the self-balanced vehicle may be acquired. When it is monitored that the user uplifts his/her forefoot, it may be monitored that the contact area between the feet and the self-balanced vehicle decreases. At this time, the self-balanced vehicle may be controlled to slow down according to the decreasing value of the contact area. Thereby, the user may slow down the self-balanced vehicle by changing the state of his/her feet on the pedals of the self-balanced vehicle, which may avoid that the user loses his/her balance due to the user's leaning backward and the backward moving of the body center of gravity. Thereby, the safety of the self-balanced vehicle is improved.

As an exemplary implementation, when the first state indicates that the heel of the user is uplifted, the self-balanced vehicle is controlled to speed up according to the decreasing value of the parameter. That is, when the first state indicates that the heel of the user is uplifted, the self-balanced vehicle is controlled to speed up according to the decreasing value of the contact area parameter.

In the example useful for understanding of the invention, it should be noted that, the self-balanced vehicle may be controlled to speed up according to the magnitude of the decreasing value. The larger the decreasing value is, the larger the speed value of the self-balanced vehicle increases.

For example, when the user uses the self-balanced vehicle having two pedals, a contact area between the feet and the self-balanced vehicle may be acquired. When it is monitored that the user uplifts his/her heel, it may be monitored that the contact area between the feet and the self-balanced vehicle decreases. At this time, the self-balanced vehicle may be controlled to speed up according to the decreasing value of the contact area. Thereby, the user may speed up the self-balanced vehicle by changing the state of his/her feet on the pedals of the self-balanced vehicle, which may avoid that the user loses his/her balance due to the user's leaning backward and the backward moving of the body center of gravity. Thereby, the safety of the self-balanced vehicle is improved.

In the example useful for understanding of the invention, through the method for controlling a self-balanced vehicle provided according to the present embodiment, during the process of controlling operation of the self-balanced vehicle, a second state of the pressure parameter input from the user through the pedal of the self-balanced vehicle is acquired. When the second state indicates that the pressure parameter is changed, a first state of the contact area parameter is acquired. When the first state indicates that the contact area parameter is changed, the self-balanced vehicle is controlled according to the change. Therefore, the user may control the operation of the self-balanced vehicle by changing the state of his/her feet on the self-balanced vehicle, which facilitates the user to control the self-balanced vehicle by his/her feet, avoids that the user loses his/her balance due to the user's leaning backward and the backward moving of the body center of gravity . Thereby, the safety of the self-balanced vehicle is improved.

The embodiments of the present invention provide a method for controlling a self-balanced vehicle. In the present embodiment, for example, the method for controlling the self-balanced vehicle is applicable in a self-balanced vehicle, and the self-balanced vehicle has a pedal. Referring to Fig. 3, Fig. 3 is a flow chart showing a method for controlling a self-balanced vehicle according to another exemplary embodiment. As shown in Fig. 3, the method for controlling a self-balanced vehicle may include following steps.

In step 301, a third state of a contact area parameter input from a user through a pedal of the self-balanced vehicle is acquired.

When the user uses the self-balanced vehicle, the contact area parameter of the user's foot on the pedal may be acquired by the touch sensor on the pedal. The acquired contact area data may be analyzed through the touch sensor, and the state of the contact area parameter input from the user through the pedal of the self-balanced vehicle is determined according to the analysis result.

In step 302, when the third state indicates that the contact area parameter is changed, a first state of the pressure parameter is acquired.

When the user uses the self-balanced vehicles, the state of the contact area parameter of the pedal of the self-balanced vehicle may be monitored. When it is monitored that the state of the contact area parameter of the pedal of the self-balanced vehicle is changed, it may be determined that the contact area parameter has been changed. In order to accurately control the operation of the self-balanced vehicle, a first state of the pressure parameter input from the user through the pedal of the self-balanced vehicle may be acquired.

In step 303, when the first state indicates that the pressure parameter is changed, operation of the self-balanced vehicle is controlled according to the change.

After the first state of the pressure parameter is acquired, it may be judged whether the first state indicates that the pressure parameter is changed. When it is determined that the first state indicates that the pressure parameter is changed, it may be further judged whether the change value of the pressure parameter is larger than a threshold value. If the change value of pressure parameter is larger than the threshold value, the operation of the self-balanced vehicle is controlled according to the change.

In the present embodiment, the threshold value is a threshold value of a change value of a preset pressure parameter of the self-balanced vehicle.

As an exemplary implementation, when the first state indicates that the pressure parameter is changed, change of the pressure parameter value at the forefoot recorded by the pedal of the self-balanced vehicle may be further acquired. Specifically, if it is acquired that the pressure parameter value at the forefoot recorded by the pedal of the self-balanced vehicle is decreasing, it may be further judged whether the decreasing value of the pressure parameter is larger than a fifth threshold value. If the decreasing value of the pressure parameter is larger than the fifth threshold value, the self-balanced vehicle is controlled to slow down according to the decreasing value.

In the present embodiment, it should be noted that, the self-balanced vehicle may be controlled to slow down according to the magnitude of the decreasing value. The larger the decreasing value is, the larger the speed value of the self-balanced vehicle decreases.

As an exemplary implementation, when the first state indicates that the pressure parameter is changed, change of the pressure parameter value at the forefoot recorded by the pedal of the self-balanced vehicle may be further acquired. Specifically, if it is acquired that the pressure parameter value at the forefoot recorded by the pedal of the self-balanced vehicle is increasing, it may be further judged whether the increasing value of the pressure parameter is larger than a sixth threshold value. If the increasing value of the pressure parameter is larger than the sixth threshold value, the self-balanced vehicle is controlled to speed up according to the decreasing value.

In the present embodiment, it should be noted that, the self-balanced vehicle may be controlled to speed up according to the magnitude of the increasing value. The larger the increasing value is, the larger the speed value of the self-balanced vehicle increases.

For example, when the user uses the self-balanced vehicle, the distribution of the pressure parameter on the pedal of the self-balanced vehicle may be analyzed. When it is monitored that the pressure value of the forefoot on the pedal is increasing, it may be further judged whether the increasing value is larger than a fourth threshold value. If the increasing value is larger than the fourth threshold value, the self-balanced vehicle is controlled to speed up according to the increasing value. Thereby, the user may conveniently control the self-balanced vehicle to speed up through his/her feet.

In the present embodiment, it should be understood that, all of the threshold values are preset threshold values of the self-balanced vehicle. One of the threshold values may be the same as or different from other threshold values. The present embodiment is not limited thereto.

In conclusion, through the method for controlling a self-balanced vehicle provided according to the present embodiment, during the process of controlling operation of the self-balanced vehicle, a third state of the contact area parameter input from the user through the pedal of the self-balanced vehicle is acquired. When the third state indicates that the contact area parameter is changed, a first state of the pressure parameter is acquired. When the first state indicates that the pressure parameter is changed, the self-balanced vehicle is controlled according to the change. Therefore, the user may control the operation of the self-balanced vehicle by changing the state of his/her feet on the self-balanced vehicle, which facilitates the user to control the self-balanced vehicle by his/her feet, avoids that the user loses his/her balance due to the user's leaning backward and the backward moving of the body center of gravity . Thereby, the safety of the self-balanced vehicle is improved.

The following is embodiments of apparatuses according to the present invention, which may be configured to perform the embodiments of methods of the present invention. Details not disclosed in the embodiments of apparatuses may be referred to the embodiments of methods.

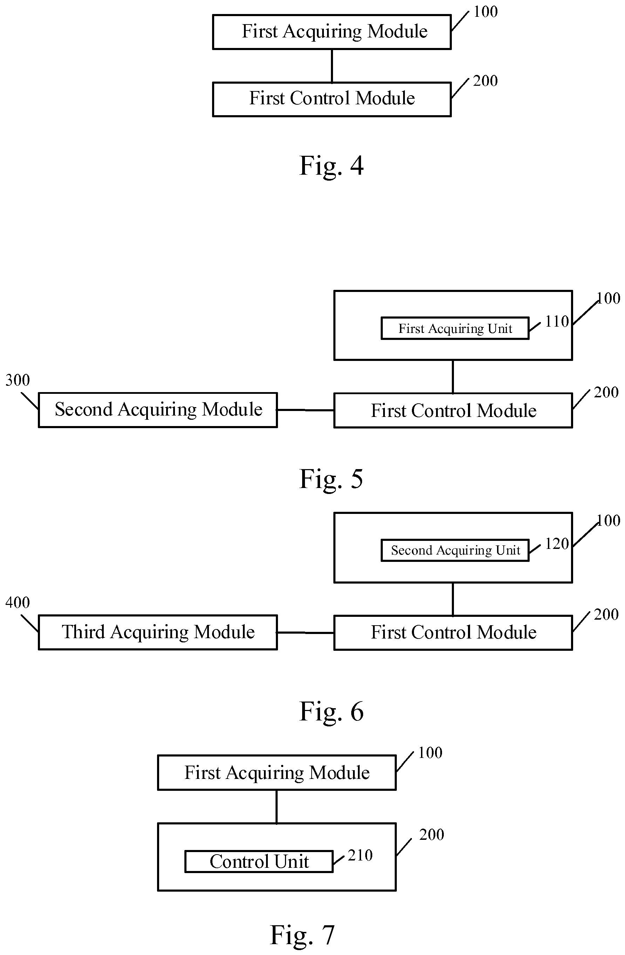

The embodiments of the present invention provide an apparatus for controlling a self-balanced vehicle. In the present embodiment, the apparatus for controlling a self-balanced vehicle is applicable in a self-balanced vehicle. The apparatus for controlling a self-balanced vehicle may be implemented through software, hardware or a combination thereof. For example, in the present embodiment, the self-balanced vehicle has a pedal. Fig. 4 is a block diagram showing an apparatus for controlling a self-balanced vehicle according to an exemplary embodiment. As shown in Fig. 4, the apparatus for controlling a self-balanced vehicle includes: a first acquiring module 100 and a first control module 200.

The first acquiring module 100 is configured to acquire a first state of a parameter input from a user through a pedal of the self-balanced vehicle.

In the present embodiment, the parameter includes at least one of: a pressure parameter, and a contact area parameter between a foot of the user and the pedal of the self-balanced vehicle.

The first control module 200 is configured to, when the first state indicates that a change has occurred in the parameter, control operation of the self-balanced vehicle according to the change.

Fig. 5 is a block diagram showing an apparatus for controlling a self-balanced vehicle according to an example useful for understanding of the invention. On the basis of Fig. 4, as shown in Fig. 5, when the parameter is the contact area parameter, the above apparatus may further include a second acquiring module 300.

The second acquiring module 300 is configured to acquire a second state of the pressure parameter.

As shown in Fig. 5, the above first acquiring module 100 may include a first acquiring unit 110.

The first acquiring unit 110 is configured to, when the second state indicates that the pressure parameter is changed, acquire a first state of the contact area parameter.

Fig. 6 is a block diagram showing an apparatus for controlling a self-balanced vehicle according to another exemplary embodiment. On the basis of Fig. 4, as shown in Fig. 6, when the parameter is the pressure parameter, the above apparatus may further include a third acquiring module 400.

The third acquiring module 400 is configured to acquire a third state of the contact area parameter.

In the present embodiment, as shown in Fig. 6, the above first acquiring module 100 may include a second acquiring unit 120.

The second acquiring unit 120 is configured to, when the third state indicates that the contact area parameter is changed, acquire a first state of the pressure parameter.

Fig. 7 is a block diagram showing an apparatus for controlling a self-balanced vehicle according to another exemplary embodiment. On the basis of Fig. 4, as shown in Fig. 7, the first control module 200 may include a control unit 210.

The control unit 210 is configured to, when the first state indicates that the parameter is changed and a change value of the parameter is larger than a threshold value, control the operation of the self-balanced vehicle according to the change.

In the present embodiment, it should be noted that, the above structure of the control unit 210 in the embodiment of apparatuses as shown in Fig. 7 may also be included in the apparatuses in the example useful for understanding of the invention as shown in Fig. 5 and the embodiments of apparatuses as shown in Fig. 6. The present invention is not limited thereto.

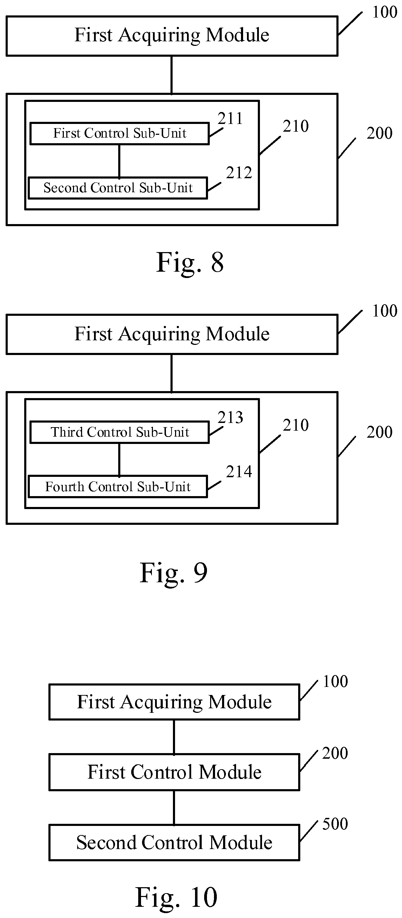

Fig. 8 is a block diagram showing an apparatus for controlling a self-balanced vehicle according to another exemplary embodiment. On the basis of Fig. 7, as shown in Fig. 8, the control unit 210 includes: a first control sub-unit 211 and a second control sub-unit 212.

The first control sub-unit 211 is configured to, when a decreasing value of the parameter is larger than a first threshold value, control the self-balanced vehicle to slow down according to the decreasing value.

The second control sub-unit 212 is configured to, when an increasing value of the parameter is larger than a second threshold value, control the self-balanced vehicle to speed up according to the increasing value.

Fig. 9 is a block diagram showing an apparatus for controlling a self-balanced vehicle according to another exemplary embodiment. On the basis of Fig. 7, as shown in Fig. 9, when the parameter is the contact area parameter, the above control unit 210 may include: a third control sub-unit 213 and a fourth control sub-unit 214.

The third control sub-unit 213 is configured to, when the first state indicates that a forefoot of the user is uplifted, control the self-balanced vehicle to slow down according to a decreasing value of the parameter.

The fourth control sub-unit 214 is configured to, when the first state indicates that a heel of the user is uplifted, control the self-balanced vehicle to speed up according to a decreasing value of the parameter.

Fig. 10 is a block diagram showing an apparatus for controlling a self-balanced vehicle according to another exemplary embodiment. On the basis of Fig. 4, as shown in Fig. 10, the above apparatus may further include a second control module 500.

The second control module 500 is configured to, when the first state indicates that the parameter is the same as that before the change occurs, control the self-balanced vehicle to keep a current speed.

In the present embodiment, it should be noted that, the above structure of the second control module 500 in the embodiment of apparatuses as shown in Fig. 10 may also be included in the apparatuses in the example useful for understanding of the invention as shown in Fig. 5 and the embodiments of apparatuses as shown in Figs. 6-9. The present invention is not limited thereto.

In conclusion, through the apparatuses for controlling a self-balanced vehicle provided according to the present embodiment, when the user uses the self-balanced vehicle, a first state of a parameter input from a user through a pedal of the self-balanced vehicle is acquired; and when the first state indicates that the parameter is changed, operation of the self-balanced vehicle is controlled according to the change. Therefore, the self-balanced vehicle is controlled according to the parameter change of the pedal of the self-balanced vehicle. The user may conveniently control the speed of the self-balanced vehicle by his/her feet, which increases the driving safety.

For the embodiments of apparatuses, since they correspond to the embodiments of methods, they can be referred to the description of the embodiments of methods. The embodiments of apparatuses described above are merely illustrative. The units described as separate components may be or may not be physically separate, and the components illustrated as units may be or may not be physical units, and may be at the same location, or may be distributed to multiple units over the network. A part of or the whole of the modules can be selected to achieve the objective of the present invention as desired. One skilled in the art can understand and practice the embodiments without paying any creative labor.

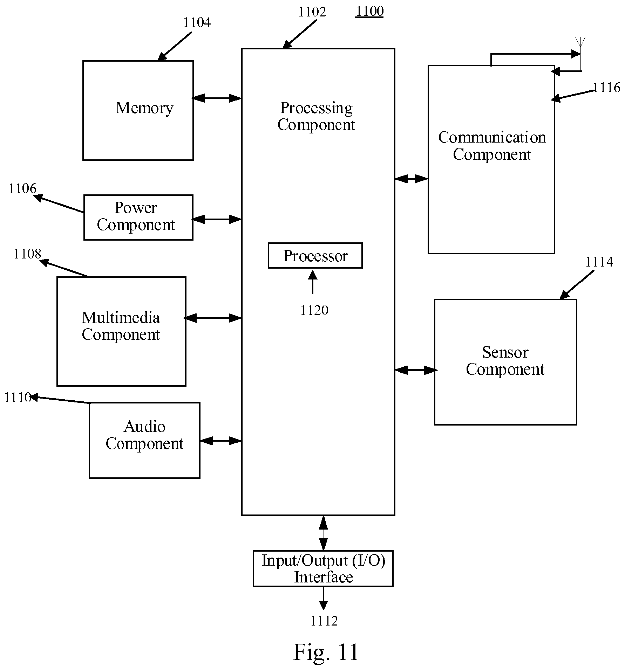

The embodiments of the present invention provide an apparatus for controlling a self-balanced vehicle. In the present embodiment, for example, the apparatus for controlling the self-balanced vehicle is applicable in a self-balanced vehicle, and the self-balanced vehicle has a pedal. Referring to Fig. 11, Fig. 11 is a block diagram showing an apparatus 1100 for controlling a self-balanced vehicle according to an exemplary embodiment.

Referring to Fig. 11, the apparatus for controlling a self-balanced vehicle 1100 may include one or more of the following components: a processing component 1102, a memory 1104, a power component 1106, a multimedia component 1108, an audio component 1110, an input/output (I/O) interface 1112, a sensor component 1114, and a communication component 1116. The apparatus for controlling a self-balanced vehicle 1100 may be for example a smartphone which is connected to the self-balanced vehicle by an appropriate communication method such as bluetooth, WiFi etc. The inventive method and computer programm can be executed on the smartphone in order to controll the self-balanced vehicle.

The processing component 1102 typically controls overall operations of the apparatus 1100. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may monitor an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to monitor the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 of the apparatus 1100, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a self-balanced vehicle, the self-balanced vehicle is enabled to perform a method for controlling a self-balanced vehicle, including:
acquiring a first state of a parameter input from a user through a pedal of the self-balanced vehicle; and
when the first state indicates that a change has occurred in the parameter, controlling operation of the self-balanced vehicle according to the change.

It should be noted that, the above illustrations of embodiments of methods for controlling a self-balanced vehicle is also applicable for embodiments of apparatus for controlling a self-balanced vehicle. The principle of implementation is similar, which will not be repeated herein.

## Claims

1. A method for controlling a self-balanced vehicle, **characterized in** comprising:
acquiring (101), by a sensor, a first state of a parameter input from a user through a pedal of the self-balanced vehicle; and
when the first state indicates that a change has occurred in the parameter, controlling (102), by a controller, operation of the self-balanced vehicle according to the change,
wherein the parameter comprises at least one of: a pressure parameter, and a contact area parameter between a foot of the user and the pedal of the self-balanced vehicle,
**characterized in that** the parameter comprises the contact area parameter, the method further comprises:
acquiring (201) a second state of a pressure parameter,
the acquiring (101) a first state of a parameter input from a user through a pedal of the self-balanced vehicle comprises:
when the second state indicates that the pressure parameter is changed, acquiring (202) a first state of the contact area parameter.
wherein when the first state indicates that the parameter is changed and a change value of the parameter is larger than a threshold value, controlling the operation of the self-balanced vehicle according to the change,
wherein controlling the operation of the self-balanced vehicle according to the change, comprises at least one of:
when a decreasing value of the parameter is larger than a first threshold value, controlling the self-balanced vehicle to slow down according to the decreasing value; and
when an increasing value of the parameter is larger than a second threshold value, controlling the self-balanced vehicle to speed up according to the increasing value.

2. The method of claim 1, wherein the parameter comprises the contact area parameter,
the when the first state indicates that the parameter is changed and a change value of the parameter is larger than a threshold value, controlling the operation of the self-balanced vehicle according to the change, comprises at least one of:
when the first state indicates that a forefoot of the user is uplifted, controlling the self-balanced vehicle to slow down according to a decreasing value of the parameter; and
when the first state indicates that a heel of the user is uplifted, controlling the self-balanced vehicle to speed up according to a decreasing value of the parameter.

3. The method of claim 1, wherein after the operation of the self-balanced vehicle is controlled according to the change, the method further comprises:
when the first state indicates that the parameter is the same as that before the change occurs, controlling the self-balanced vehicle to keep a current speed.

4. An apparatus for controlling a self-balanced vehicle, comprising:
a first acquiring module (100), configured to acquire a first state of a parameter input from a user through a pedal of the self-balanced vehicle; and
a first control module (200), configured to, when the first state indicates that a change has occurred in the parameter, control operation of the self-balanced vehicle according to the change,
wherein the parameter comprises at least one of: a pressure parameter, and a contact area parameter between a foot of the user and the pedal of the self-balanced vehicle,
**characterized in that** the parameter comprises the contact area parameter,
the apparatus further comprises:
a second acquiring module (300), configured to acquire a second state of a pressure parameter,
the first acquiring module (100) comprises:
a first acquiring unit (110), configured to, when the second state indicates that the pressure parameter is changed, acquire a first state of the contact area parameter;
wherein the first control module (200) comprises:
a control unit (210), configured to, when the first state indicates that the parameter is changed and a change value of the parameter is larger than a threshold value, control the operation of the self-balanced vehicle according to the change,
wherein the control unit (210) comprises:
a first control sub-unit (211), configured to, when a decreasing value of the parameter is larger than a first threshold value, control the self-balanced vehicle to slow down according to the decreasing value; and
a second control sub-unit (212), configured to, when an increasing value of the parameter is larger than a second threshold value, control the self-balanced vehicle to speed up according to the increasing value.

5. The apparatus of claim 4, wherein the parameter comprises the contact area parameter;
the control unit (210) comprises:
a third control sub-unit (213), configured to, when the first state indicates that a forefoot of the user is uplifted, control the self-balanced vehicle to slow down according to a decreasing value of the parameter; and
a fourth control sub-unit (214), configured to, when the first state indicates that a heel of the user is uplifted, control the self-balanced vehicle to speed up according to a decreasing value of the parameter.

6. The apparatus of claim 4, wherein the apparatus further comprises:
a second control module (500), configured to, when the first state indicates that the parameter is the same as that before the change occurs, control the self-balanced vehicle to keep a current speed.

7. A computer program with instructions to, when executed by an apparatus for controlling a self-balanced vehicle according to claims 4-6, controlling a self-balanced vehicle according to the method of any one of claims 1-3.

8. A computer-readable information medium containing instructions of a computer program according to claim 7.

## Patentansprüche

1. Verfahren zum Steuern eines selbst-balancierten Fahrzeugs, **gekennzeichnet durch** die folgenden Schritte:
Erfassen (101), durch einen Sensor, eines ersten Zustands eines Parameters, der von einem Benutzer über ein Pedal des selbst-balancierten Fahrzeugs eingegeben wird; und
wenn der erste Zustand angibt, dass eine Veränderung in dem Parameter aufgetreten ist, Steuern (102), durch einen Controller, des Betriebs des selbst-balancierten Fahrzeugs entsprechend der Veränderung;
wobei der Parameter aufweist: einen Druckparameter und/oder einen Parameter der Kontaktfläche zwischen einem Fuß des Benutzers und dem Pedal des selbst-balancierten Fahrzeugs,
**dadurch gekennzeichnet, dass** der Parameter den Kontaktflächenparameter aufweist, wobei das Verfahren ferner den folgenden Schritt aufweist:
Erfassen (201) eines zweiten Zustands eines Druckparameters,
wobei das Erfassen (101) eines ersten Zustands eines von einem Benutzer über ein Pedal des selbst-balancierten Fahrzeugs eingegebenen ersten Parameters die folgenden Schritte aufweist:
wenn der zweite Zustand angibt, dass der Druckparameter verändert ist, Erfassen (202) eines ersten Zustands des Kontaktflächenparameters,
wobei, wenn der erste Zustand angibt, dass der Parameter verändert ist, und ein Änderungswert des Parameters größer als ein Schwellenwert ist, das selbst-balancierte Fahrzeug entsprechend der Veränderung gesteuert wird, wobei das Steuern des selbst-balancierten Fahrzeugs entsprechend der Veränderung mindestens einen der folgenden Schritte aufweist:
wenn ein abnehmender Wert des Parameters größer als ein erster Schwellenwert ist, Steuern des selbst-balancierten Fahrzeugs zum Verlangsamen entsprechend dem abnehmenden Wert; und
wenn ein zunehmender Wert des Parameters größer als ein zweiter Schwellenwert ist, Steuern des selbst-balancierten Fahrzeugs zum Beschleunigen entsprechend dem zunehmenden Wert.

2. Verfahren nach Anspruch 1, bei welchem der Parameter den Kontaktflächenparameter aufweist,
wobei, wenn der erste Zustand angibt, dass der Parameter verändert ist und ein Änderungswert des Parameters größer als ein Sachwellenwert ist, das Steuern des Betriebs des selbst-balancierten Fahrzeugs entsprechend der Veränderung mindestens einen der folgenden Schritte aufweist:
wenn der erste Zustand angibt, dass ein Vorderfuß des Benutzers angehoben ist, Steuern des selbst-balancierten Fahrzeugs zum Verlangsamen entsprechend einem abnehmenden Wert des Parameters; und
wenn der erste Zustand angibt, dass eine Ferse des Benutzers angehoben ist, Steuern des selbst-balancierten Fahrzeugs zum Beschleunigen entsprechend einem abnehmenden Wert des Parameters.

3. Verfahren nach Anspruch 1, bei welchem das Verfahren nach dem Steuern des Betriebs des selbst-balancierten Fahrzeugs entsprechend der Veränderung ferner den folgenden Schritt aufweist:
wenn der erste Zustand angibt, dass der Parameter derselbe wie vor dem Auftreten der Veränderung ist, Steuern des selbst-balancierten Fahrzeugs zum Beibehalten einer aktuellen Geschwindigkeit.

4. Vorrichtung zum Steuern eines selbst-balancierten Fahrzeugs, mit:
ein erstes Erfassungsmodul (100), das dazu ausgebildet ist, einen ersten Zustand eines durch einen Benutzer über ein Pedal des selbst-balancierten Fahrzeugs zu erfassen; und
ein erstes Steuermodul (200), das dazu ausgebildet ist, wenn der erste Zustand angibt, dass eine Veränderung in dem Parameter aufgetreten ist, den Betrieb des selbst-balancierten Fahrzeugs entsprechend der Veränderung zu steuern,
wobei der Parameter aufweist: einen Druckparameter und/oder einen Parameter der Kontaktfläche zwischen einem Fuß des Benutzers und dem Pedal des selbst-balancierten Fahrzeugs,
**dadurch gekennzeichnet, dass** der Parameter den Kontaktflächenparameter aufweist,
wobei die Vorrichtung ferner aufweist:
ein zweites Erfassungsmodul (300), das dazu ausgebildet ist, einen zweiten Zustand eines Druckparameters zu erfassen,
wobei das erste Erfassungsmodul (100) aufweist:
eine erste Erfassungseinheit (110) die dazu ausgebildet ist, wenn der zweite Zustand angibt, dass der Druckparameter verändert ist, einen ersten Zustand des Kontaktflächenparameters zu erfassen;
wobei das erste Steuermodul (200) aufweist:
eine Steuereinheit (200), die dazu ausgebildet ist, wenn der erste Zustand angibt, dass der Parameter verändert ist und ein Änderungswert des Parameters größer als ein Schwellenwert ist, den Betrieb des selbst-balancierten Fahrzeugs entsprechend der Veränderung zu steuern,
wobei die Steuereinheit (210) aufweist:
eine erste Steuer-Untereinheit (211), die dazu ausgebildet ist, wenn ein abnehmender Wert des Parameters größer als ein erster Schwellenwert ist, das selbst-balancierte Fahrzeug zum Verlangsamen entsprechend dem abnehmenden Wert zu steuern; und
eine zweite Steuer-Untereinheit (212), die dazu ausgebildet ist, wenn ein zunehmender Wert des Parameters größer als ein zweiter Schwellenwert ist, das selbst-balancierte Fahrzeug zum Beschleunigen entsprechend dem zunehmenden Wert zu steuern.

5. Vorrichtung nach Anspruch 4, bei welcher der Parameter den Kontaktflächenparameter aufweist;
wobei die Steuereinheit (210) aufweist:
eine dritte Steuer-Untereinheit (213), die dazu ausgebildet ist, wenn der erste Zustand angibt, dass ein Vorderfuß des Benutzers angehoben ist, das selbst-balancierte Fahrzeug zum Verlangsamen entsprechend einem abnehmenden Wert des Parameters zu steuern; und
eine vierte Steuer-Untereinheit (214), die dazu ausgebildet ist, wenn der erste Zustand angibt, dass eine Ferse des Benutzers angehoben ist, das selbst-balancierte Fahrzeug zum Beschleunigen entsprechend einem abnehmenden Wert des Parameters zu steuern.

6. Vorrichtung nach Anspruch 4, bei welcher die Vorrichtung ferner aufweist:
ein zweites Steuermodul (500), das dazu ausgebildet ist, wenn der erste Zustand angibt, dass der Parameter derselbe wie vor dem Auftreten der Veränderung ist, das selbst-balancierte Fahrzeug zum Beibehalten einer aktuellen Geschwindigkeit zu steuern.

7. Computerprogramm mit Befehlen zum Steuern eines selbst-balancierten Fahrzeugs entsprechend dem Verfahren nach einem der Ansprüche 1-3, wenn das Programm von einer Vorrichtung zum Steuern eines selbst-balancierten Fahrzeugs nach den Ansprüchen 4-6 ausgeführt wird.

8. Computerlesbares Informationsmedium, das Befehle eines Computerprogramms nach Anspruch 7 aufweist.

## Revendications

1. Procédé de commande d'un véhicule auto-équilibré, **caractérisé en ce qu'**il comprend :
l'acquisition (101), par un capteur, d'un premier état d'un paramètre saisi par un utilisateur par l'intermédiaire d'une pédale du véhicule auto-équilibré ; et
lorsque le premier état indique qu'un changement s'est produit dans le paramètre, la commande (102), par un dispositif de commande, du fonctionnement du véhicule auto-équilibré en fonction du changement,
dans lequel le paramètre comprend au moins l'un parmi :
un paramètre de pression, et un paramètre de surface de contact entre un pied de l'utilisateur et la pédale du véhicule auto-équilibré,
**caractérisé en ce que** le paramètre comprend le paramètre de surface de contact, le procédé comprend en outre :
l'acquisition (201) d'un second état d'un paramètre de pression,
l'acquisition (101) d'un premier état d'un paramètre entré par un utilisateur par l'intermédiaire d'une pédale du véhicule auto-équilibré comprend :
lorsque le second état indique que le paramètre de pression est modifié, l'acquisition (202) d'un premier état du paramètre de surface de contact.
dans lequel, lorsque le premier état indique que le paramètre est modifié et qu'une valeur de modification du paramètre est supérieure à une valeur de seuil, la commande du fonctionnement du véhicule auto-équilibré en fonction de la modification,
dans lequel la commande du fonctionnement du véhicule auto-équilibré en fonction du changement comprend au moins l'un parmi :
lorsqu'une valeur décroissante du paramètre est supérieure à une première valeur de seuil, la commande du véhicule auto-équilibré pour qu'il ralentisse en fonction de la valeur décroissante ; et
lorsqu'une valeur croissante du paramètre est supérieure à une seconde valeur de seuil, la commande du véhicule auto-équilibré pour qu'il accélère en fonction de la valeur croissante.

2. Procédé selon la revendication 1, dans lequel le paramètre comprend le paramètre de surface de contact, lorsque le premier état indique que le paramètre est modifié et qu'une valeur de modification du paramètre est supérieure à une valeur de seuil, la commande du fonctionnement du véhicule auto-équilibré selon le changement, comprend au moins l'un parmi :
lorsque le premier état indique qu'un avant-pied de l'utilisateur est soulevé, la commande du véhicule auto-équilibré afin qu'il ralentisse selon une valeur décroissante du paramètre ; et
lorsque le premier état indique qu'un talon de l'utilisateur est soulevé, la commande du véhicule auto-équilibré afin qu'il accélère selon une valeur décroissante du paramètre.

3. Procédé selon la revendication 1, dans lequel après que le fonctionnement du véhicule auto-équilibré a été commandé selon le changement, le procédé comprend en outre :
lorsque le premier état indique que le paramètre est le même que celui avant que le changement ne se produise, la commande du véhicule auto-équilibré pour conserver une vitesse actuelle.

4. Appareil pour commander un véhicule auto-équilibré, comprenant :
un premier module d'acquisition (100), configuré pour acquérir un premier état d'une entrée de paramètre d'un utilisateur par le biais d'une pédale du véhicule auto-équilibré ; et
un premier module de commande (200), configuré pour, lorsque le premier état indique qu'un changement s'est produit dans le paramètre, la commande du fonctionnement du véhicule auto-équilibré en fonction du changement,
dans lequel le paramètre comprend au moins l'un parmi :
un paramètre de pression, et un paramètre de surface de contact entre un pied de l'utilisateur et la pédale du véhicule auto-équilibré,
**caractérisé en ce que** le paramètre comprend le paramètre de surface de contact,
l'appareil comprend en outre :
un second module d'acquisition (300), configuré pour acquérir un second état d'un paramètre de pression,
le premier module d'acquisition (100) comprend :
une première unité d'acquisition (110), configurée pour, lorsque le second état indique que le paramètre de pression a changé, l'acquisition d'un premier état du paramètre de surface de contact ;
dans lequel le premier module de commande (200) comprend :
une unité de commande (210), configurée pour, lorsque le premier état indique que le paramètre a changé et qu'une valeur de changement du paramètre est supérieure à une valeur de seuil, commander le fonctionnement du véhicule auto-équilibré en fonction du changement,
dans lequel l'unité de commande (210) comprend :
une première sous-unité de commande (211), configurée pour, lorsqu'une valeur décroissante du paramètre est supérieure à une première valeur de seuil, commander le véhicule auto-équilibré pour qu'il ralentisse en fonction de la valeur décroissante ; et
une deuxième sous-unité de commande (212), configurée pour, lorsqu'une valeur croissante du paramètre est supérieure à une seconde valeur de seuil, commander le véhicule auto-équilibré pour qu'il accélère en fonction de la valeur croissante.

5. Appareil selon la revendication 4, dans lequel le paramètre comprend le paramètre de surface de contact ;
l'unité de commande (210) comprend :
une troisième sous-unité de commande (213), configurée pour, lorsque le premier état indique qu'un avant-pied de l'utilisateur est soulevé, commander le véhicule auto-équilibré afin qu'il ralentisse selon une valeur décroissante du paramètre ; et
une quatrième sous-unité de commande (214), configurée pour, lorsque le premier état indique qu'un talon de l'utilisateur est soulevé, commander le véhicule auto-équilibré afin qu'il ralentisse selon une valeur décroissante du paramètre.

6. Appareil selon la revendication 4, dans lequel l'appareil comprend en outre :
un second module de commande (500), configuré pour, lorsque le premier état indique que le paramètre est le même que celui avant que le changement ne se produise, commander le véhicule auto-équilibré afin qu'il conserve une vitesse actuelle.

7. Programme informatique avec des instructions pour, lorsqu'il est exécuté par un appareil pour commander un véhicule auto-équilibré selon les revendications 4 à 6, commander un véhicule auto-équilibré selon le procédé de l'une quelconque des revendications 1 à 3.

8. Support d'informations lisible par ordinateur contenant des instructions d'un programme informatique selon la revendication 7.
